# EUROPEAN PATENT APPLICATION

(11) **EP 4 635 370 A1**
(43) Date of publication of application: **22.10.2025**
(21) Application number: 24383031.2
(22) Date of filing: 26.09.2024
(51) Int. Cl.: A47C 4/02, A47C 7/42, A47C 7/54, A47C 17/04, F16B 12/60

(54) **BACKREST AND ARMREST FIXING SYSTEM FOR FURNITURE**

(30) Priority: 15.04.2024 EP 24382385
(71) Applicant: Fama Sofas, S.L.U., 30510 Yecla (Murcia) (ES)
(72) Inventor: Lopez Gil, Felix, Yecla (ES)
(74) Representative: Ballester Cañizares, Rosalia

(57) **Abstract**

The present invention relates to a system for joining backrests and arms in furnishing comprising a J-shaped flat and curved part (1), with an internal cut-out, which allows the insertion into the circular part (2) by means of a forward and downward movement to fit into the joining system.

## Description

### Object of the invention

The object of this specification is a system for joining backrests and arms in furnishing, especially applicable to armchairs and sofas, which works by means of a number of J-shaped parts attached to the arms and backrests of the sofa.

### Background of the invention

Today, there are various joining systems for assembling and disassembling modular sofas and armchairs. The most common are the crossbow or eyelet systems. Theoretically, these systems are designed to allow the different portions of the sofa to be easily joined or detached, but in practice they present several drawbacks.

The complexity of assembly and disassembly is one of the drawbacks, since although these systems are designed to facilitate assembly without the need for tools, in reality they can be quite difficult to handle. It is common for users, especially those lacking experience, to face difficulties when trying to properly align and assemble the joining parts, which can lead to incorrect or unstable assemblies. When trying to assemble, it is very common that one of the two fittings does not fit, leaving the arm or backrest poorly assembled.

In addition, the disassembly process, whether for maintenance tasks such as deep cleaning or for furnishing reconfiguration, can be equally difficult. Parts that are expected to slide easily often get jammed, requiring more strength than that which the average user could comfortably and safely apply. It is very common for these parts to be partially covered by the upholstered parts of the sofa, which makes it difficult to align the two eyelets that are required for a strong joint at the same time. Likewise, when sofas or armchairs have removable upholstery, which is usually connected with Velcro, the additional thickness of the upholstery and the Velcro can further complicate the assembly and disassembly process. The tight space and extra friction make it harder to handle and adjust sofa parts. Finally, although these joints are generally strong once assembled, constant assembly and disassembly can wear down the fitting mechanisms, leading to a reduced stability and durability of the piece of furniture in the long term.

These drawbacks highlight the importance of considering both functionality and ease of use when choosing modular sofas and joining systems, especially for those who plan to reconfigure or move their pieces of furniture often.

### Description of the invention

The technical problem solved by the present invention is a system for joining backrests and arms in furnishing, intended to simplify the assembly of furnishing such as armchairs and sofas, among others, by means of an innovative and versatile system that allows said arms and backrests to be easily assembled and disassembled by the user even though the upholstery is removable and which is achieved with the system that is characterised in claim 1. For this purpose, the system for joining backrests and arms in furnishing, object of the present invention, comprises a J-shaped flat and curved part with an internal cut-out that allows the insertion into the circular part, which is joined to the structure of the sofa or armchair, by means of a forward and downward movement to fit into the joining system. Likewise, the circular part has at least one protruding round pivot on which the flat and curved part rests to fit and fix the final position reached, preventing one or both parts from not being correctly assembled.

Due to its design, the ability to assemble and disassemble any type of furnishing in seconds is improved through a much more intuitive system that requires less strength, since it is based on the support and sliding of the parts, which is easier to perform for any type of user; as well as the adaptive improvement that allows the system to adapt to different furnishing types and sizes, which increases its applicability in different environments and design requirements.

This comprehensive approach not only improves user's experience but also fosters a positive environmental impact, aligning with contemporary trends towards sustainability and ecological responsibility in the design of products that are detachable to take up little space, occupy fewer cubic metres during transport and also require less packaging.

### Brief description of the figures

What follows is a very brief description of a series of drawings that aid in better understanding the invention and which are expressly related to an embodiment of said invention that is presented by way of a non-limiting example of the same.

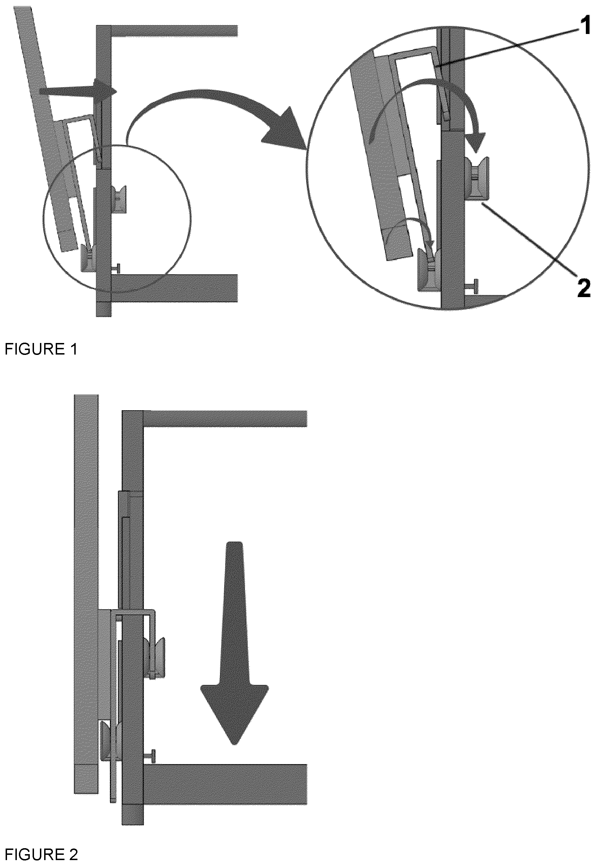

Figure 1 shows a first view of the system for joining backrests and arms in furnishing, object of the present invention.
Figure 2 shows a second view of the system for joining backrests and arms in furnishing, object of the present invention.

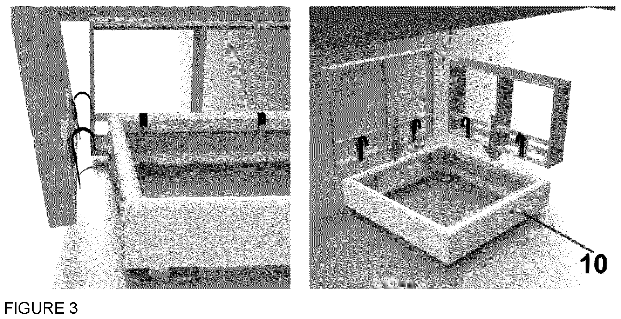

Figure 3 shows a third view of the system for joining backrests and arms in furnishing, object of the present invention.

### Description of a detailed embodiment of the invention

The attached figures show a preferred embodiment of the invention. More specifically, a system for joining backrests and arms in furnishing which is mainly made up of a J-shaped flat and curved part (1), including an internal cut-out. This part facilitates a controlled movement in a vertical direction, allowing its insertion into a circular part (2). The circular part (2) is firmly joined to the structure of the sofa or armchair (10) by means of screws or equivalent fixing elements, acting as the primary support for the joint.

The flat and curved part (1) has, in turn, a curved version when the sofa or armchair (10) is made of fabric and a straight version when the sofa or armchair (10) is made of metal.

The circular part (2) has at least one protruding round pivot on which the flat and curved part (1) rests, guaranteeing a precise coupling and ensuring fixation in the desired final position.

The system introduces an initial assembly method where the lower portion of the parts (1) rests on the circular part (2) located on the external portion of the sofa, with an inclination of approximately 30°. This design allows for a clear and complete view of the joining points, facilitating the precise alignment of the arms or backrests during assembly.

The assembly method is completed by applying downward pressure from the top of the arm or backrest until the upright position is reached. At this point, the part is allowed to move downwards, so that the slot of the part (1), now correctly aligned, fits into both the external and internal fixing mechanisms of the sofa, ensuring a robust and reliable connection.

This assembly method not only makes it easier to align and couple the parts that are required to assemble the arm, but also allows the option of omitting the outer circular part (1) when there is a side stop that prevents swinging. This way, an arm can be installed or removed at the end of the seat without any visible elements, enabling sofa configurations with or without arms, while maintaining a clear aesthetic without exposed hardware.

## Claims

1. A system for joining backrests and arms in furnishing, **characterised in that** it comprises a J-shaped flat and curved part (1), with an internal cut-out which allows the insertion into the circular part (2) by means of a forward and downward movement to fit into the joining system.

2. The system according to claim 1 wherein the circular part (2) is joined to the structure of the sofa or armchair (10) by means of screws or the like and wherein the circular part (2) has at least one protruding round pivot on which the flat and curved part (1) rests to fit and fix the final position reached, preventing one or both parts from not being correctly assembled.

3. The system according to claim 1 and 2 wherein the parts (1) and (2) are not placed on the outside of the furnishing, facilitating the insertion or extraction of the arms thereof.

4. The system according to claim 1 and 2 wherein the flat and curved part (1) has, in turn, a curved version when the sofa or armchair (10) is made of fabric and a straight version when the sofa or armchair (10) is made of metal.
